# EUROPÄISCHE PATENTSCHRIFT

(11) **EP 2 364 761 B1**
(45) Veröffentlichungstag und Bekanntmachung des Hinweises auf die Patenterteilung: **15.01.2014**
(21) Anmeldenummer: 10154867.5
(22) Anmeldetag: 26.02.2010
(51) Int. Cl.: B01D 29/11, B01D 29/66, B01D 35/12

(54) **Rückspülbare Filteranordnung**
Backwashable filter assembly
Filtre à lavage à contre-courant

(43) Veröffentlichungstag der Anmeldung: 14.09.2011
(73) Patentinhaber: Georg Fischer JRG AG, 4450 Sissach (CH)
(72) Erfinder: Bürli, Christian, 4460 Gelterkinden (CH)
(74) Vertreter: Fenner, Seraina

(56) Entgegenhaltungen:
- EP-A2- 0 120 988
- DE-A1- 2 757 447
- DE-B- 1 059 884
- DE-C2- 3 306 003
- JP-A- 58 080 493

## Beschreibung

Die Erfindung betrifft einen rückspülbarer Filter für flüssige Filtermedien mit einem Gehäuse einem Zufluss für das zu filternde Medium, einem Sieb, einem Abfluss für das gefilterte Medium und einem Schmutzwasser-Abfluss wobei der Filter mindestens zwei in dem Gehäuse voneinander getrennte Filterkammern aufweist, wobei die Filterkammern jeweils zwei verschliessbare Öffnungen aufweisen und eine der Öffnungen geöffnet und die jeweils andere geschlossen ist.

Rückspülbare Filter dienen dazu, dass beispielweise durch Sand, Metallspäne, Rostpartikel etc. verunreinigte Flüssigkeiten von diesen festen Stoffen befreit werden, um nachgeschaltete Einrichtungen wie z.B. Armaturen, Geräte und sonstige Verbraucher vor Beschädigungen zu schützen. Nach einer gewissen Betriebsdauer setzen sich die Feststoffe auf den Filterelementen, beispielsweise metallische Siebe ab, so dass es zu einem Druckabfall kommt. Daher ist es erforderlich, diese Filterelemente ab einem bestimmten Druckabfall zu reinigen. Dies geschieht in der Regel dadurch, dass man die Strömungsrichtung umkehrt, d.h. die Flüssigkeit also entgegengesetzt zur Strömungsrichtung im Filterbetrieb durch das Filtermedium (Sieb) laufen lässt. Die auf dem Filtermedium abgesetzten Feststoffe werden somit rückgespült und durch einen separaten Abfluss abgeleitet. Solche rückspülbaren Filter sind bereits bekannt.

In der DE 29 17 090 C2 ist eine rückspülbare Filtereinrichtung beschrieben. Sie weist einen im Hauptbetrieb von aussen nach innen und im Rückspülbetrieb von innen nach aussen durchströmten Hauptfilter auf. Im Hauptfilter ist eine beim Rückspülen angetriebene Sprüh - oder Spritzvorrichtung drehbar gelagert. Der Filter ist so ausgebildet, dass die auch bei einer abschnittsweisen Reinigung des Filters die gesamte über den Einlass der Filtereinrichtung eingetretene und durch ein geöffnetes Absperrventil fliessende Strömung ins Innere der Sprüh- oder Spritzvorrichtung gelangen kann, so dass das Medium ohne Strömungsverlust für den Reinigungsvorgang zur Verfügung steht.

Bei einem weiteren rückspülbaren Filtergerät, beschrieben in der EP 0 121 090 A2, für strömende Flüssigkeiten ist eine Rückspülvorrichtung vorgesehen, die ein mit mehreren ringförmigen Einlassöffnungen versehenes Kanalstück enthält, das austrittsseitig mit einem Rückspülkanal verbindbar ist.

Bei einem Filtergerät für strömendes Wasser nach der EP 0 621 066 A1 ist eine Rückspülvorrichtung vorgesehen, die ein mit mindestens einer schlitzförmigen Eintrittsöffnung versehenes Rückspülelement enthält, das austrittsseitig mit einem Rückspülkanal verbindbar ist.

Eine Filteranordnung zum Filtern von Trinkwasser ist in der EP 1 946 812 A1 offenbart. Sie weist einen absperrbaren Einlass und einen zwischen dem Einlass und dem Auslass angeordneten Filter auf, wobei zwischen Filter und Auslass eine Kammer vorgesehen ist, die im unteren Bereich mit dem Filter in Verbindung steht und im oberen Bereich abgeschlossen ist, so dass sich in der Kammer ein Luftkissen bildet und zwischen Einlass und Filter ein absperrbarer Ablauf vorgesehen ist. Zum Rückspülen werden Einlass und Auslass abgesperrt und anschliessend der Ablauf geöffnet. Dann drückt die Luft des Luftkissens das Wasser in umgekehrter Richtung durch den Filter zum Ablauf.
Im oben aufgeführten Stand der Technik ist es mehr oder weniger erforderlich, den eigentlichen Filterbetrieb für die Rückspülung zu unterbrechen.

Weiter aus dem Stand der Technik bekannte rückspülbare Filtereinrichtungen sind in der DE 27 57 447 A1 und der DE 10 59 884 B offenbart wobei der Rückspülbetrieb während des Filterbetrieb erfolgen kann. Nachteilig an den zuvor erwähnten Ausführungsformen ist die grosse Bauform die sie aufweisen.

Es ist Aufgabe der Erfindung eine Vorrichtung bei denen der eigentliche Filterbetrieb und die Rückspülung gleichzeitig erfolgen, ohne den Filterbetrieb zu unterbrechen. Weitere Aufgaben sind: kleine Baugrössen, wenig Rückspülwasserverbrauch, einfache Konstruktion.

Diese Aufgabe wird erfindungsgemäss dadurch gelöst, dass in jeder Filterkammer jeweils ein separat betätigbarer Stössel angeordnet ist, wobei die eine Öffnungen und die andere Öffnung mittels des Stössels mittels der Innenwand der Filterkammern Ventile für das zu filternde Medium bzw. für das Schmutzwasser bilden, wobei der Stössel zur Umschaltung zwischen Filterbetrieb und Rückspülbetrieb der jeweiligen Filterkammer dient und die Filterkammern kreisförmig um den Mittelpunkt des zylindrischen Gehäuses angeordnet sind.

Mehrere (mindestens zwei) separate Filterkammern mit im richtigen Zeitpunkt verschliessbaren Öffnungen ermöglichen eine mit der Rückspülung gleichzeitige Filterung, indem mindestens eine Filterkammer so gesteuert ist, dass sie die Rückspülung und mindesten eine andere Filterkammer die Filterung übernimmt. Die Rückspülung kann gleichzeitig mit der Filterung ablaufen. By-Pässe wie im Stand der Technik sind nicht notwendig.

Eine bevorzugte Ausführungsform besteht in einer in einer Filterkammer vorgesehen StösselNentilanordung. Denkbar sind auch scheibenförmige Verschliessvorrichtung, indem sich eine Lochscheibe unter/über eine Öffnung schieben, wobei die Zwischenräume der Löcher der Lochscheibe die Öffnungen verschliessen und die Löcher der Scheibe die Öffnungen auf Durchfluss stellen.

gemäss einer bevorzugten Ausführungsform weist der rückspülbarer Filter in jeder Filterkammer jeweils ein Stössel auf, wobei eine Öffnungen und die andere Öffnung mittels des Stössels und mittels der Innenwand der Filterkammern Ventile für das zu filternde Medium bzw. für das Schmutzwasser bilden. Die Filterkammern sind teilkreisförmig um eine zentrale als Zufluss dienende Öffnung des Gehäuses angeordnet, wobei die Innenwand der zentralen Öffnung das Sieb für das Filtermedium bildet. Unterhalb der Öffnung des Gehäuses ist eine Betätigungsvorrichtung für die Verschiebung der Stössel vorgesehen.

Der gleichzeitige Filter- bzw. Rückspülprozess kann dadurch optimiert werden, dass eine gewisse Anzahl von Filterkammern kreisförmig um den Mittelpunkt des zylindrischen Gehäuses angeordnet sind.

Vorteilhaft ist der obere und der unter Bereich der Stössel jeweils im Zusammenwirken mit der Innenwand der Filterkammern als Absperr-/Öffnungsventil für das zu filternde Medium bzw. für das Schmutzwasser ausgebildet.

In den Filterkammern sind Stössel vorgesehen, die so ausgestaltet sind, dass mit der Innenwand der Filterkammer im oberen Bereich und im unteren Bereich jeweils eine Ventilfunktion übernehmen, wobei das obere Ventil offen und gleichzeitig das untere Ventil geschlossen ist und umgekehrt.

Eine weitere Ausgestaltung der Erfindung besteht darin, dass am unteren Bereich des Gehäuses eine Betätigungsvorrichtung für die Verschiebung der Stössel und damit die Stellung der als Sitzventile ausgebildeten Ventile bewirkt.

Die Betätigungsvorrichtung ist als ein Kegelradgetriebe aufgebaut, welches eine um das Zentrum des Gehäuses fahrbaren Rolle kreisförmig bewegt. Die Stössel weisen in Richtung der Rolle einen Fortsatz auf, wobei die Rolle die Stössel über den Fortsatz nach oben in Achsrichtung des Gehäuses zur Betätigung der Ventile verschiebt, sobald sie sich unterhalb eines Stössels befindet. ist. Sobald sich die Rolle unterhalb der Stössel entfernt, fallen die Stössel infolge des Druckes und der Schwerkraft nach unten, so dass die Stellung der Ventile so erfolgt, dass der Spülbetrieb für diese Filterkammer wieder erfolgen kann.

Vorzugsweise kann im unteren Bereich des Gehäuses eine kreisförmige Nut zur Führung der Rolle vorgesehen sein.

Die Betätigungsvorrichtung kann manuell oder mittels eines Motors oder in sonstiger Weise antreibbar sein.

Vorzugsweise ist dem Filter ein Reduzierventil nachgeschaltet. Je nach Anwendung kann der rückspülbare Filter mit oder ohne Reduzierung arbeiten.

Die Erfindung zeichnet sich zusätzlich durch ein Verfahren aus, wonach im Filterbetrieb das zu filternde Medium über mindestens eine Filterkammer durch das Sieb geleitet wird und das mindestens eine der Filterkammern Mittel aufweist, mit denen der Fluss des Mediums umkehrbar ist und das Medium mit dem auf dem Sieb haftenden Schmutz durch mindestens eine andere Filterkammer über den Schmutzwasserabfluss abgeführt wird, wobei dieser Rückspülvorgang gleichzeitig mit dem Filterbetrieb der anderen Filterkammern erfolgt. Die Rückspülung erfolgt sektorweise erfolgt, wobei der Verlauf eines Rückspülvorgangs in einer Filterkammer sinusförmig zur Vermeidung von Druckschlägen abläuft.

Im Folgenden wird die Erfindung anhand von Zeichnungen eines Ausführungsbeispiels dargestellt. Es zeigen
- Fig. 1: einen Schnitt durch einen rückspülbaren Filter im Filterbetrieb;
- Fig. 2: einen Schnitt durch einen rückspülbaren Filter im Rückspülbetrieb;
- Fig. 3: einen Schnitt durch einen rückspülbaren Filter im Filterbetrieb ohne Reduzierung;
- Fig. 4: eine schematische Darstellung der Betätigungsvorrichtung eines Stössels in Schnittansicht und Draufsicht;
- Fig. 5: zwei Gegenüberstellungen des rückspülbaren Filters in "Rückspülbetrieb" (Fig. 5a) und "Filterbetrieb" (Fig. 5b)

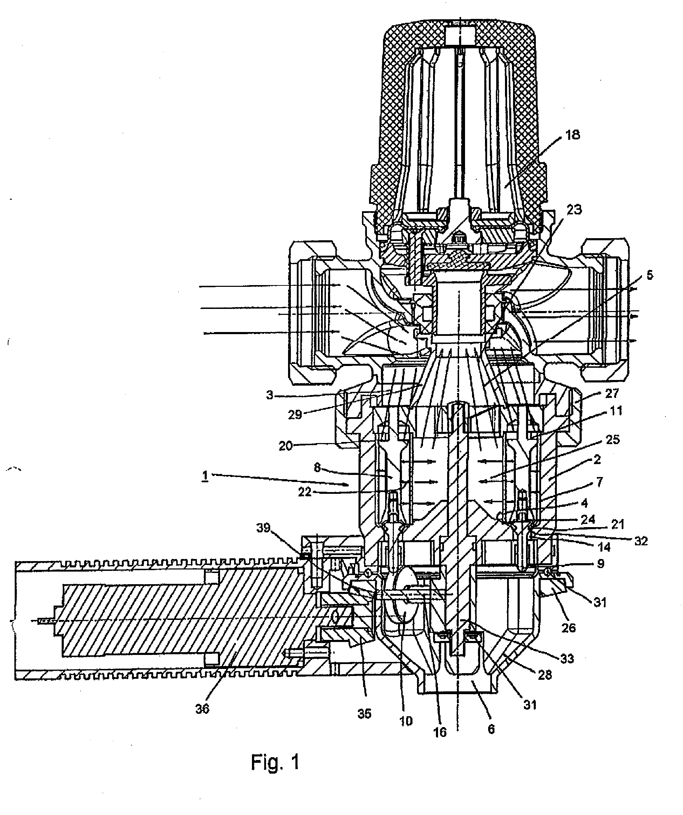

Die in Fig. 1 dargestellte Zeichnung zeigt ein Ausführungsbeispiel eines erfindungsgemässen Rückspülfilters im Filterbetrieb. Der Filter 1 weist ein zylindrisches Gehäuse 2, mit einem Anschlussflansch 27 und einer am unteren Ende des Gehäuses 2 angeordneten Abflusskammer 28 auf. Der rückspülbare Filter 1 besitzt einen ringförmigen Zufluss 3 und mittig einen Abfluss 5. Die ungefilterte Flüssigkeit strömt in Pfeilrichtung 22 durch die im Filter 1 angeordneten Filterkammern 7 und verlässt die Filterkammern 7 über ein Sieb 4 gefiltert in Pfeilrichtung 23 durch den Abfluss 5. Die Filterkammern 7 sind kreisförmig um ein zylindrisches, nach oben eine zentrale Öffnung 12 bildendes Sieb 4 angeordnet, wobei die Filterkammern 7 zylindrisch ausgebildet sind und die Innenfläche 24 der Filterkammern 7 bereichsweise von der Aussenseite des Siebes 4 begrenzt wird, so dass das zu filternde Medium durch das Sieb 4 gefiltert über die Mitte 25 des Filters 1 nach oben durch den Abfluss 5 geleitet werden kann. In den Filterkammern 7 sind Stössel 8 vorgesehen, die parallel zur Achsrichtung des Gehäuses 2 verschiebbar sind. Die Filterkammern 7 weisen im oberen und im unteren Bereich Ventile 20 und 21 auf, die als Sitzventile ausgebildet sind und mit den speziell geformten Stösseln 8 zusammenwirken. Weiterhin weist der Stössel 8 an seiner Unterseite einen Fortsatz 9 auf. Dieser Fortsatz 9 wird durch eine Bohrung 32 des Gehäuses 2 geführt und steht an der unteren Stirnseite des Gehäuses 2 über. Vorzugsweise kann der Stössel 8 mindestens aus zwei Teilen, wie in Fig.1 dargestellt, bestehen. Die Stössel 8 dienen zur Umschaltung von Filterbetrieb auf Rückspülbetrieb. Dieser Vorgang wird weiter unten beschrieben. Die Form und des Gehäuses 2, der Filterkammern 7 und des Siebes 4 sind in diesem Ausführungsbeispiel zylindrisch dargestellt. Sie können aber jede beliebige geeignete Form bilden, beispielsweise polygonal, oval oder ähnliches.

Oberhalb des Abflusses 5 befindet sich ein konisches, innen hohles Zwischenstück 29, welches einem Reduzierventil 18 vorgeschaltet ist und die gefilterte Flüssigkeit in den Abfluss des Reduzierventils 18 leitet.

Die unterhalb des Gehäuses 2 angeordnete Abflusskammer 28 ist drehbar angeordnet, wobei das Gehäuse 2 und die Abflusskammer 28 mittels Kugellagern 31 gelagert sind. Innerhalb der Abflusskammer 28 ist eine Rolle 10 auf einer Welle 16 drehbar gelagert. Die Welle 16 führt in einen in der Mittelachse des Gehäuses 2 angeordneten Zapfen 33. Die Rolle 10 ist kreisförmig zur Betätigung der Stössel 8 um die Mittellinie des Gehäuses 2 verfahrbar. Sie kann aber auch in einer nicht dargestellten Nut wie in einer Schiene geführt werden. Die Welle 16 der Rolle 10 ist in der Aussenwand 34 in der Abflusskammer 28 auf der Innenseite gelagert. Ausserhalb der Abflusskammer 28 ist am oberen Rand ein Zahnkranz 26 befestigt, in den ein Kegelrad 35 eingreift, sodass über das aus Zahnkranz 26 und Kegelrad 35 gebildete Kegelradgetriebe die Abflusskammer 28 zusammen mit der Rolle 10 drehbar bewegt werden kann. Der Antrieb kann sowohl manuell oder über einen Motor 36 erfolgen.

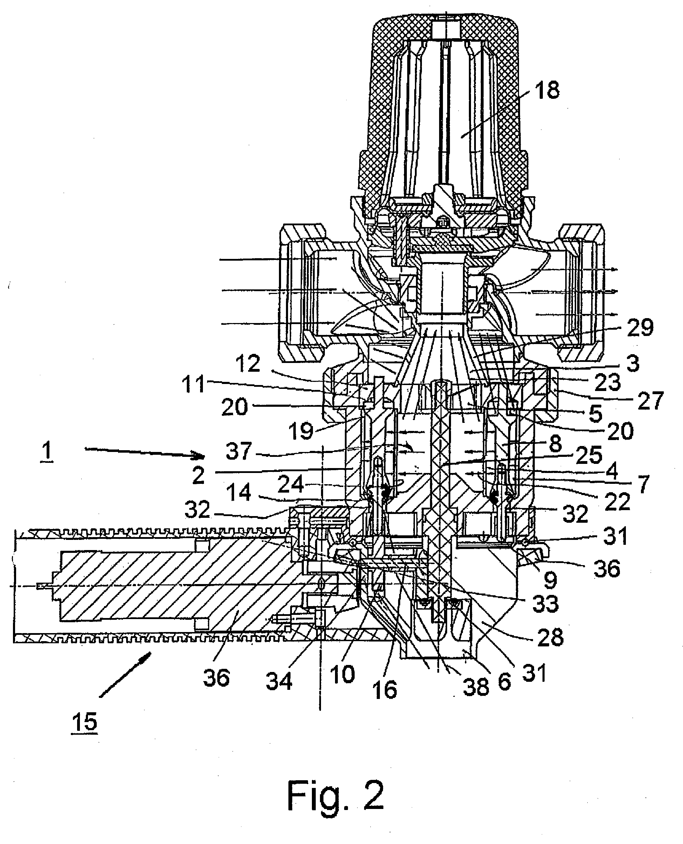

Die Figur 2 zeigt den rückspülbaren Filter 1 im Rückspülbetrieb, wobei nur die in der Zeichnung links dargestellte Filterkammer 7 im Rückspülbetrieb gezeigt ist, die rechte Filterkammer 7 arbeitet im Filterbetrieb, um zu zeigen, dass der Filter- und der Rückspülbetrieb erfindungsgemäss gleichzeitig erfolgt. Das bei der Öffnung 11 der Filterkammer 7 vorgesehene Ventil 20, gebildet aus Innenwand 19 und Stössel 8, ist im Rückspülbetrieb geschlossen. Das bei der Öffnung 14 der Filterkammer 7 befindliche Ventil 21, ebenfalls gebildet aus Innenwand 19 und Stössel 8, ist geöffnet. Die Rückspülung erfolgt in Richtung der Pfeile 37 und 38. Das Rückspülwasser mit den Verunreinigungen gelangt durch den Schmutzwasser-Abfluss6.

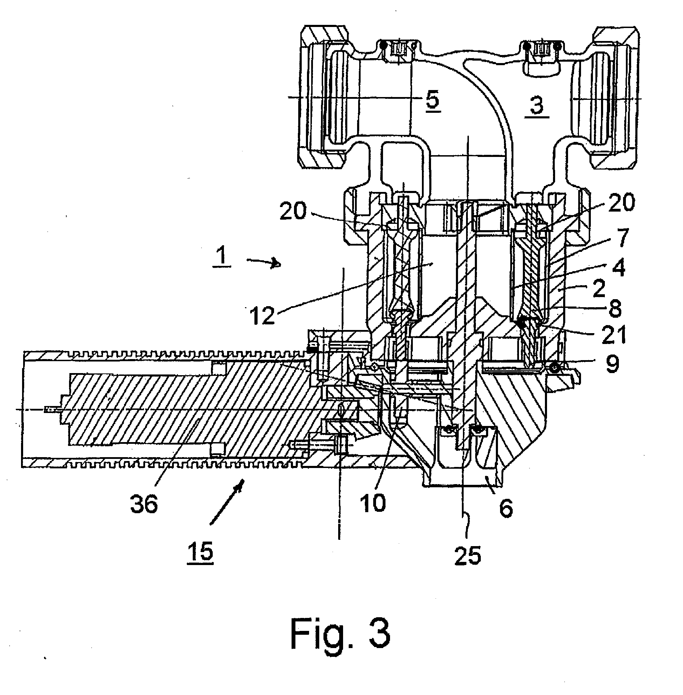

Die am unteren Ende des Filters angeordnete Betätigungsvorrichtung 15 für die Stössel 8 wird in Figur 3 gezeigt.

Die Figur 3 zeigt dieselbe Anordnung ohne Reduzierventil 18 mit denselben Bezugszeichen wie in den Figuren 1 und 2. Auf der rechten Seite der Mittellinie 25 arbeitet die Filterkammer 7 im Filterbetrieb, indem die Flüssigkeit durch den Zufluss 3 über das geöffnete Stösselventil 20 und über das Sieb 4 gefiltert in den Abfluss 5 geleitet wird. Auf der linken Seite der Mittellinie 25 wird die Flüssigkeit bei geschlossenem Ventil 20 über das geöffnete Ventil 21 in umgekehrter Richtung durch das Sieb 4 geleitet und als Schmutzwasser durch den Schmutzwasserabfluss 6 nach unten abgeleitet. Die Betätigungsvorrichtung 15 für die Stössel und somit für das Einstellen der Ventile 20 und 21 besteht aus einem Motor 36, dem Kegelradgetriebe 38 (Zahnkranz 26 und Kegelrad 35, der Rolle 10 und dem Stössel 8.

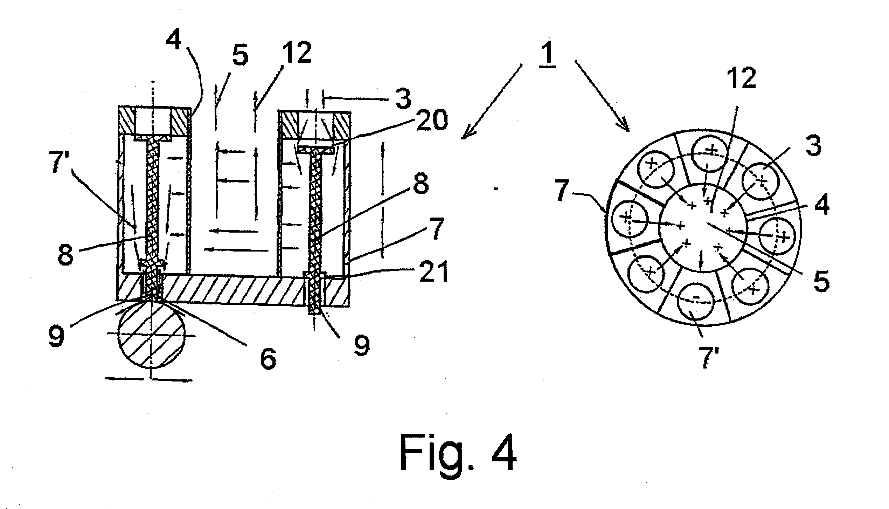

Anhand von Figur 4 ist das erfindungsgemässe Filter-Rückspülverfahren schematisch dargestellt links in Seiten- und rechts in Draufsicht. Die Draufsicht zeigt den Rückspülfilter mit acht Filterkammern 7. Der innere Kreis stellt das Filtersieb 4 dar. Um das Sieb 4 sind zentralsymmetrisch die Filterkammern 7 angeordnet, wobei sieben Filterkammern 7 im Filterbetrieb arbeiten (mit + bezeichnet). Die zu filternde Flüssigkeit gelangt über den Pfeil 39 in die Filterkammer 7 durch das Sieb 4 und gefiltert über den Pfeil 40 zu den Verbrauchern. Die Filterkammer 7' arbeitet im Rückspülbetrieb, wobei die Flüssigkeit in umgekehrter Richtung in Bezug auf den Filterbetrieb geführt wird, dargestellt mit Pfeil 41. In dieser Darstellung wird in eindeutiger Weise offenbart, dass Filter- und Rückspülbetrieb gleichzeitig ablaufen können. Die Filterkammern 7 arbeiten im Filterbetrieb, die Filterkammer 7' im Rückspülbetrieb. Es kann auch in verschiedenen Verhältnissen gearbeitet werden, z.B. fünf Filterkammern im Filterbetrieb und drei Filterkammern im Rückspülbetrieb.

Wie die Umschaltung von Filterbetrieb auf Rückspülbetrieb zeigt die Seitenansicht von Figur 4. Die rechte Filterkammer 7 arbeitet im Filterbetrieb, die linke Kammer 7' im Rückspülbetrieb. In den Kammern 7, 7' ist jeweils ein Stössel 8 angeordnet, der in Richtung 42 beweglich ist und zwei Stellungen einnehmen kann. Im Filterbetrieb befindet sich der Stössel 8 in unterer Stellung und im Rückspülbetrieb in oberer Stellung. Der Stössel 8 bildet mit der oberen Öffnung 11 und unteren Öffnung 14 der Filterkammer die Ventile 20 und 21. Die Stellung und die Betriebszustände der Ventile 20 und 21, nämlich offen oder zu, werden durch eine unterhalb der Stössel 8 befindliche Rolle 10 erreicht, wobei die Rolle 10 kreisförmig auf einem Kreis, der durch die Mittelpunkte der Filterkammern 7 gebildet ist, verfahrbar ist. Der Aussenumfang der Rolle 10 schiebt einen Fortsatz 9 des Stössels 8 nach oben in Rückspülstellung. Befindet sich die Rolle 10 nicht unter einer Filterkammer 10, fällt der Stössel 8 infolge der Schwerkraft nach unten in den Filterbetrieb.

Die zu filternde Flüssigkeit gelangt (rechte Kammer 7 der Seitenansicht) in den Zufluss 3 bei geöffnetem Ventil 20 über das Sieb 4 gefiltert zum Abfluss 5, wobei das untere Ventil 21 geschlossen ist. Nach Schliessung des Ventils 20 und Öffnen des Ventils 21 mittels der Rolle 10 (linke Kammer 7' der Seitenansicht) wird die Flüssigkeit von Innen durch das verschmutzte Sieb 4 zum Reinigen geleitet. Das Schmutzwasser wird über das geöffnete Ventil 21 durch den Schmutzwasserabfluss 6 abgeleitet.

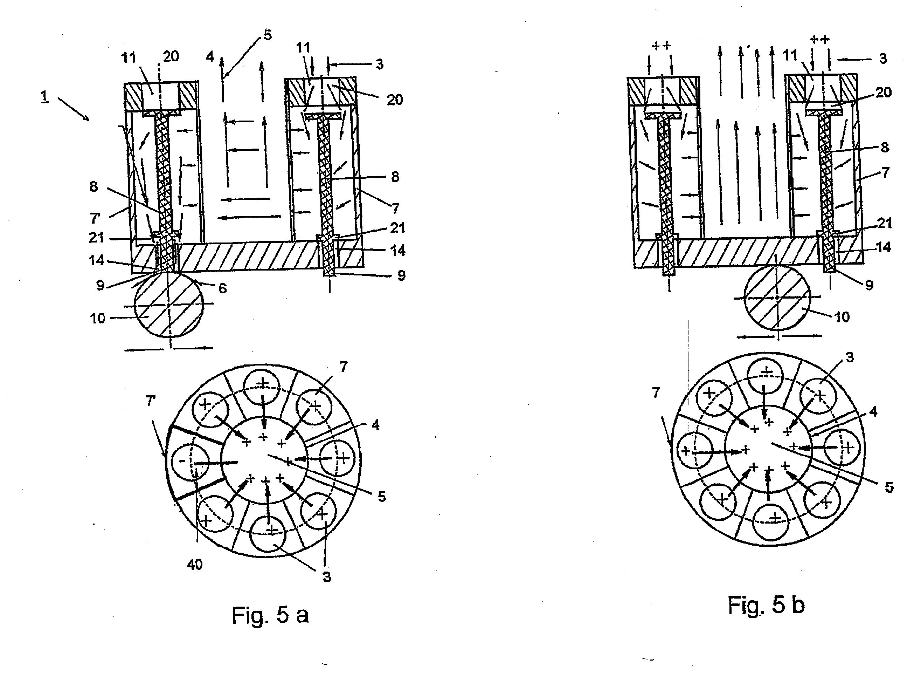

In der Fig. 5 sind in zwei Ansichten der Rückspülbetrieb, Fig. 5a, und der Filterbetrieb, Fig. 5b gezeigt. Die Filterkammern 7 sind voneinander getrennt und teilkreisförmig um den Mittelpunkt des Filters 1 angeordnet. Ansonsten entsprechen die Bezugszeichen denen in Fig. 4. Die Filterkammer 7' arbeitet in Rückspülbetrieb, wobei mit 40 der Einlass des in Rückspülstellung darstellt.

Die mit der Erfindung verbundenen Vorteile liegen insbesondere darin, dass der rückspülbare Filter sehr kompakt erstellt werden kann, d.h. mit kleinen Ausmassen. Durch diese ermöglichte optimal kleine Bauweise bietet eine hohe Hygiene wegen der kleinen Oberflächen. Da aufgrund des erfindungsgemässen Rückspülbetriebs die Rückspülung sehr häufig durchgeführt werden kann, ist eine Verkleinerung des Systems möglich. Das Filtergehäuse kann aus durchsichtigem Material gefertigt sein, um den Verschmutzungsgrad rechtzeitig zu erkennen. Wegen der einfachen Antriebskonstruktion ist eine Automatisierung und Steuerung möglich. Eine By-Pass-Konstruktion ist nicht erforderlich. Der rückspülbare Filter ist unempfindlich gegen grobe und starke Verschmutzungen. Die Sitzventile sind langlebiger als andere Ventile, wie beispielsweise Schiebeventile. Sitzventile sind selbstdichtend. Wenn der Wasserdruck steigt, werden die Sitzventile stärker auf den Sitz gedrückt und damit die Dichtigkeit erhöht. Die Anwendung der Betätigungsrolle vermeidet Druckschläge ( Sinusverlauf und kein Stufenverlauf). Wegen der kleineren Baumöglichkeit wird der Rückspülwasserverbrauch vermindert. Weil die Rückspülöffnung am tiefsten Punkt liegt, wird der Grobschmutz sauber ausgespült. Es sind keine aufwendigen Ventile, wie z.B. Magnetventile notwendig. Der Motor der Betätigungsvorrichtung ist schwenkbar.

**Bezugszeichenliste**

| | | | |
|---|---|---|---|
| 1 | Filter | 31 | Kugellager |
| 2 | Gehäuse | 32 | Bohrung |
| 3 | Zufluss | 33 | Zapfen |
| 4 | Sieb | 34 | Aussenwand |
| 5 | Abfluss | 35 | Kegelrad |
| 6 | Schmutzwasserabfluss | 36 | Motor |
| 7 | Filterkammer | 37 | Pfeilrichtung |
| 8 | Stössel | 38 | Pfeilrichtung |
| 9 | Fortsatz | 39 | Kegelradgetriebe |
| 10 | Rolle | | |
| 11 | Öffnung | | |
| 12 | Öffnung | | |
| 13 | | | |
| 14 | Öffnung | | |
| 15 | Betätigungsvorrichtung | | |
| 16 | Welle | | |
| 17 | | | |
| 18 | Reduzierventil | | |
| 19 | Innenwand | | |
| 20 | Ventil | | |
| 21 | Ventil | | |
| 22 | Pfeilrichtung | | |
| 23 | Pfeilrichtung | | |
| 24 | Innenfläche | | |
| 25 | Mitte | | |
| 26 | Zahnkranz | | |
| 27 | Anschlussflansch | | |
| 28 | Abflusskammer | | |
| 29 | Zwischenstück | | |

## Patentansprüche

1. Rückspülbarer Filter (1) für flüssige Filtermedien mit einem Gehäuse (2), einem Zufluss (3) für das zu filternde Medium, einem Sieb (4) einem Abfluss (5) für das gefilterte Medium und einem Schmutzwasser-Abfluss (6), wobei der Filter (1) mindestens zwei in dem Gehäuse (2) voneinander getrennte Filterkammern (7) aufweist, wobei die Filterkammern (7) jeweils zwei verschliessbare Öffnungen (11, 14) aufweisen und eine der Öffnungen (11, 14) geöffnet und die jeweils andere (11, 14) geschlossen ist **dadurch gekennzeichnet, dass** in jeder Filterkammer (7) jeweils ein separat betätigbarer Stössel (8) angeordnet ist, wobei die eine Öffnungen (11) und die andere Öffnung (14) mittels des Stössels (8) mittels der Innenwand (19) der Filterkammern (7) Ventile (20, 21) für das zu filternde Medium bzw. für das Schmutzwasser bilden, wobei der Stössel (8) zur Umschaltung zwischen Filterbetrieb und Rückspülbetrieb der jeweiligen Filterkammer (7) dient und die Filterkammern kreisförmig um den Mittelpunkt des zylindrischen Gehäuses (2) angeordnet sind.

2. Rückspülbarer Filter (1) nach Anspruch 1, **dadurch gekennzeichnet, dass** die Filterkammern (7) teilkreisförmig um eine zentrale als Zufluss (3) dienende Öffnung (12) des Gehäuses (2) angeordnet sind, wobei die Innenwand der zentralen Öffnung (12) das Sieb (4) für das Filtermedium bildet.

3. Rückspülbarer Filter (1) nach mindestens einem der vorherigen Ansprüche, **dadurch gekennzeichnet, dass** unterhalb der Öffnung (14) des Gehäuses (2) eine Betätigungsvorrichtung (15) für die Verschiebung der Stössel (8) vorgesehen ist.

4. Rückspülbarer Filter (1) nach Anspruch 3, **dadurch gekennzeichnet, dass** die Betätigungsvorrichtung (15) eine mittels eines Kegelradgetriebes (39) kreisförmig um das Zentrum des Gehäuses (2) fahrbaren Rolle (10) und die Stössel (8) in Richtung der Rolle (10) einen Fortsatz (9) aufweisen, wobei die Rolle (10) die Stössel (8) über den Fortsatz (9) nach oben in Achsrichtung des Gehäuses (2) zur Betätigung der Ventile (20, 21) verschiebt, sobald sie sich unterhalb eines Stössels (8) befindet. ist.

5. Rückspülbarer Filter (1) nach mindestens einem der vorherigen Ansprüche, **dadurch gekennzeichnet, dass** im unteren Bereich (14) des Gehäuses (2) eine kreisförmige Nut (13) zur Führung der Rolle (10) vorgesehen ist.

6. Rückspülbarer Filter (1) nach Anspruch 3 oder 4 , **dadurch gekennzeichnet, dass** die Betätigungsvorrichtung (15) manuell oder mittels eines Motor antreibbar ist.

7. Rückspülbarer Filter (1) nach mindestens einem der vorherigen Ansprüche, **dadurch gekennzeichnet, dass** dem Filter (1) ein Reduzierventil (18) nachgeschaltet ist.

## Claims

1. Backwashable filter (1) for liquid filter media with a housing (2), an inlet (3) for the medium which is to be filtered, a screen (4), an outlet (5) for the filtered medium, and a dirty water outlet (6), wherein the filter (1) has at least two filter chambers (7) which are separated from each other in the housing (2), wherein the filter chambers (7) have two sealable openings (11, 14) in each case and one of the openings (11, 14) is open and the other respective opening (11, 14) is closed, **characterized in that** a separately operable plunger (8) is arranged in each filter chamber (7) in each case, wherein the one opening (11) and the other opening (14), by means of the plunger (8) and by means of the inner wall (19) of the filter chambers (7), form valves (20, 21) for the medium which is to be filtered or for the dirty water, wherein the plunger (8) serves for switching between filter operation and backwashing operation of the respective filter chambers (7) and the filter chambers are arranged in a circular manner around the centre point of the cylindrical housing (2).

2. Backwashable filter (1) according to Claim 1, **characterized in that** the filter chambers (7) are arranged in the manner of a pitch circle around a central opening (12) of the housing (2) which serves as an inlet (3), wherein the inner wall of the central opening (12) forms the screen (4) for the filter medium.

3. Backwashable filter (1) according to at least one of the preceding claims, **characterized in that** an operating device (15) for displacing the plunger (8) is provided beneath the opening (14) of the housing (2).

4. Backwashable filter (1) according to Claim 3, **characterized in that** the operating device (15) has a roller (10) which is ovable in a circular manner around the centre of the housing (2) by means of a bevel gear (39) and the plunger (8) has an extension (9) in the direction of the roller (10), wherein the roller (10) displaces the plunger (8) via the extension (9) upwards in the axial direction of the housing (2) for operating the valves (20, 21) as soon as it is located beneath a plunger (8).

5. Backwashable filter (1) according to at least one of the preceding claims, **characterized in that** a circular groove (13) is provided in the lower region (14) of the housing (2) for guiding the roller (10).

6. Backwashable filter (1) according to Claim 3 or 4, **characterized in that** the operating device (15) can be driven manually or by means of a motor.

7. Backwashable filter (1) according to at least one of the preceding claims, **characterized in that** a reducing valve (18) is connected downstream to the filter (1).

## Revendications

1. Filtre à lavage à contre-courant (1) pour milieux de filtration fluides, comprenant un boîtier (2), une amenée (3) pour le milieu à filtrer, un tamis (4), une sortie (5) pour le milieu filtré et une sortie d'eau sale (6), le filtre (1) présentant au moins deux chambres de filtration (7) séparées l'une de l'autre dans le boîtier (2), les chambres de filtration (7) présentant chacune deux ouvertures (11, 14) pouvant être fermées et l'une des ouvertures (11, 14) étant ouverte et l'autre ouverture respective (11, 14) étant fermée, **caractérisé en ce que** dans chaque chambre de filtration (7) est à chaque fois disposé un poussoir (8) pouvant être actionné séparément, l'une des ouvertures (11) et l'autre ouverture (14) formant, au moyen du poussoir (8), au moyen de la paroi interne (19) des chambres de filtration (7), des soupapes (20, 21) pour le milieu à filtrer ou pour l'eau sale, le poussoir (8) servant à commuter entre le mode de filtration et le mode de lavage à contre-courant de la chambre de filtration respective (7) et les chambres de filtration étant disposées sous forme circulaire autour du centre du boîtier cylindrique (2).

2. Filtre à lavage à contre-courant (1) selon la revendication 1, **caractérisé en ce que** les chambres de filtration (7) sont disposées sous forme de cercle partiel autour d'une ouverture centrale (12) du boîtier (2) servant d'amenée (3), la paroi interne de l'ouverture centrale (12) formant le tamis (4) pour le milieu de filtration.

3. Filtre à lavage à contre-courant (1) selon au moins l'une quelconque des revendications précédentes, **caractérisé en ce qu'**en dessous de l'ouverture (14) du boîtier (2) est prévu un dispositif d'actionnement (15) pour le déplacement des poussoirs (8).

4. Filtre à lavage à contre-courant (1) selon la revendication 3, **caractérisé en ce que** le dispositif d'actionnement (15) présente un rouleau (10) pouvant être déplacé au moyen d'un engrenage conique (39) sous forme circulaire autour du centre du boîtier (2) et les poussoirs (8) présentent, dans la direction du rouleau (10), une saillie (9), le rouleau (10) déplaçant les poussoirs (8) par le biais de la saillie (9) vers le haut dans la direction axiale du boîtier (2) afin d'actionner les soupapes (20, 21), dès qu'il se trouve en dessous d'un poussoir (8).

5. Filtre à lavage à contre-courant (1) selon au moins l'une quelconque des revendications précédentes, **caractérisé en ce que** dans la région inférieure (14) du boîtier (2) est prévue une rainure de forme circulaire (13) pour le guidage du rouleau (10).

6. Filtre à lavage à contre-courant (1) selon la revendication 3 ou 4, **caractérisé en ce que** le dispositif d'actionnement (15) peut être entraîné manuellement ou au moyen d'un moteur.

7. Filtre à lavage à contre-courant (1) selon au moins l'une quelconque des revendications précédentes, **caractérisé en ce qu'**une soupape de détente (18) est montée en aval du filtre (1).
